# EUROPEAN PATENT SPECIFICATION

(11) **EP 1 238 716 B1**
(45) Date of publication and mention of the grant of the patent: **21.12.2005**
(21) Application number: 02075978.3
(22) Date of filing: 26.02.1998
(51) Int. Cl.: B08B 9/032, B67C 3/00, F16K 27/00

(54) **Aseptic valve assembly**
Aseptische Ventilanordnung
Ensemble vanne aseptique

(30) Priority: 28.02.1997 US 810613; 05.09.1997 US 926312
(43) Date of publication of application: 11.09.2002
(62) Divisional of application: 98906714.5
(73) Proprietor: Tetra Laval Holdings & Finance SA, 1009 Pully (CH)
(72) Inventor: Jonathan P Buesing, Maplewood, Minnesota 55109 (US)
(74) Representative: Hitchcock, Esmond Antony

(56) References cited:
- EP-A- 0 332 806
- WO-A-94/21865
- GB-A- 518 286
- GB-A- 527 938
- US-A- 2 636 653
- US-A- 5 273 075
- US-A- 5 427 150

## Description

The present invention relates to an integrated diaphragm valve body having a normal orientation and defining first, second and third ports according to the preamble of claim 1. This valve body is used in an aseptic valve assembly routing a flowable food product on a packaging machine.

Aseptic packaging of milk, juice, other. flowable foods, and other products requires that the product must be initially sterilized or otherwise treated, as by pasteurizing it. Then, throughout the packaging operation, the product must be kept sterile. Care must be taken to ensure that the product is not contaminated with cleaning fluids, lubricants, ambient air, or non-sterile matter. If the product is not aseptic (for. example, properly-handled conventionally pasteurized milk is not aseptic), stringent steps must be taken to avoid trapping the product in any crevice, pocket, dead end or.mechanism, as an entrapped product which is not aseptic when it enters may sustain microbial growth and may form.unsightly lumps or. particles. This machinery must be designed to facilitate regular inspection of any mechanism which might deteriorate and thus trap the product or. expose it to contaminants.

The dairy industry has developed ways to maintain packaging machinery in sanitized condition while minimizing the need to disassemble it for cleaning. Standards for maintaining permanently installed piping in milk processing plants and the like in sanitary condition by cleaned-in-place (CIP) or mechanical cleaning. *See 3A Accepted Practices For Permanently Installed Product And*

### Solution Pipelines And Cleaning Systems Used In Milk And Milk Product

*Processing Plants, Number 605-04,* DAIRY, FOOD AND ENVIRONMENTAL SANITATION, Vol. 12, No. 2 (February, 1992). In CIP cleaning, the milk distribution mechanism is cleaned and sanitized solely by circulating cleaning or sanitizing fluids (water, detergent solutions or steam) through the piping as required. An apparatus meeting the 3A standard is desired, as it can be efficiently used, cleaned and kept sanitary, even though the pasteurized milk being processed is not aseptic and remains perishable.

Many techniques have been developed for cleaning liquid distribution systems. Some are disclosed for example, in European Patent Specification No: 0 332 806; PCT Specification No: WO 94/21865; and United States Patent Specification No: 2 636 653.

Block-and-bleed valve assemblies, also known as "leak detector" valves, have been used to ensure that two process streams, like a sanitary product and a cleaning fluid which are to flow alternately through the same piping, do not mix, either. during normal operation or. due to leakage or other failure of a single valve. Two valves are provided in series in a block-and-bleed valve. The inlet valve is located at the inlet to the valve chamber, and is normally closed to stop the flow of one of the fluids into the chamber. The outlet valve is located at the outlet to the valve chamber, and is normally closed to stop the flow (usually, unintended backflow) of the other of the fluids into the valve chamber. A normally-open drain in the valve chamber, which is also valved, facilitates leak detection. For example, the drain tube leaving the valve can be transparent so any leakage into the drain may be seen by an operator.

In conventional block-and-bleed valves, two or more separate valve bodies are assembled to form the complete valve assembly, as by welding a tee of tubing between the outlet ports of the respective valve bodies. The tubing and valve outlet passages in the resulting assembly define a "dead leg" which is longer. than optimal. Dead legs and poorly drained internal valve surfaces represent places where a product or. chemicals may undesirably pool.

As noted above, the present invention relates to an integrated diaphragm valve body for use in an aseptic valve assembly. Diaphragm valves are of course known in the art. Examples are disclosed in British Patent Specification Nos: 518 286 and 527 938; and in United States Patent Specification Nos: 5 273 075 and 5 427 150.

The present invention is directed at an integrated diaphragm valve body having a normal orientation that it occupies in use, and defining first, second and third ports; a first weir separating the first port from the second port, having first and second faces, with the first face on the same side as the first port and defining with the first port a first passage; and a second weir separating the third port from the second port, and having first and second faces with the first face on the same side as the third port defining with the third port a third passage, and the second face defining a second passage. According to the invention the first and second weirs have valve seats oriented orthogonally relative to each other, and the second face of the second weir is a non-pooling surface which self-drains through at least one of the ports when the valve body is in its normal orientation.

Particular embodiments of the invention are the subject of the dependent claims.

The present invention substantially resolves the problem of dead legs and poorly drained areas in valve assemblies. This is accomplished by providing a valve assembly which orients a particular surface of the valve to decrease or eliminate pooling such as dead leg areas.

The normal orientation of the integrated diaphragm valve body of the invention; in use in a valve assembly routing a flowable food product, establishes whether a particular surface is horizontal or not, and whether it is upward-facing or not. Upward-facing surfaces which are horizontal or concave tend to allow a liquid to pool, while downward-facing surfaces and substantially convex or non-horizontal surfaces do not allow a liquid to pool. In the description which follows, downward-facing surfaces, as well as upward-facing surfaces which are neither horizontal nor convex, and more generally any surfaces which do not allow liquid to pool, are defined as "non-pooling" surfaces.

Various features and advantages of the invention will be apparent from the following description, given by way of example, of plant in which valves incorporating the invention may be used. Reference will be made to the accompanying drawings wherein:
Figure 1 is a schematic view of a food product production and packaging plant feeding four packaging machines from a single process line via four interfaces. Each interface interrelates the process line with one of the packaging machines and its cleaning fluid and steam supplies
Figure 2 is a more detailed schematic side elevation of one of the interfaces of Figure 1.
Figure 3 is a view similar to Figure 2, showing one arrangement of valve positions and fluids present in the interface;
Figure 4 is a perspective view of the embodiment of Figure 3, with the valve diaphragms, elements, and operators removed to show the orientation of interior structure.
Figure 5 is a top plan view of the embodiment of Figure 4, showing the valves fully assembled.
Figure 6 is an isolated front elevation of an assembly of the valves 80, 82, and 92 similar to Figure 4, modified to further integrate them. Interior structure is shown by phantom lines.
Figure 7 is a rear elevation of the assembly of Figure 6. Interior. structure is shown by phantom lines.
Figure 8 is a section taken along section line 18-18 of Figure 6, but modified by adding the valve diaphragm element in its closed position.
Figure 9 is a section taken along section line 19-19 of Figure 6.
Figure 10 is a view similar to Figure 6 of a second embodiment of the invention, showing an assembly of the valves 86, 88, and 98.
Figure 11 is a view similar to Figure 7 of the embodiment of Figure 10.
Figure 12 is a section taken along line 10-10 of Figure 10.
Figure 13 is a section taken along line 11-11 of Figure 10.

Identical reference characters for different views indicate like or corresponding parts.

All terminology shall have its broadest interpretation unless specifically defined otherwise. The term "sanitary" is used broadly with reference to material which is sanitary, near-aseptic, or aseptic, unless a specific distinction is made. The term "food" is used as one nonexclusive example of material which is prepared or. packaged under. sanitary conditions. The present apparatus is also suitable for processing orally and non-orally administered pharmaceutical preparations or any other.material which is perishable of may cause processing difficulties if the material is allowed to accumulate in the apparatus or support microbial. growth.

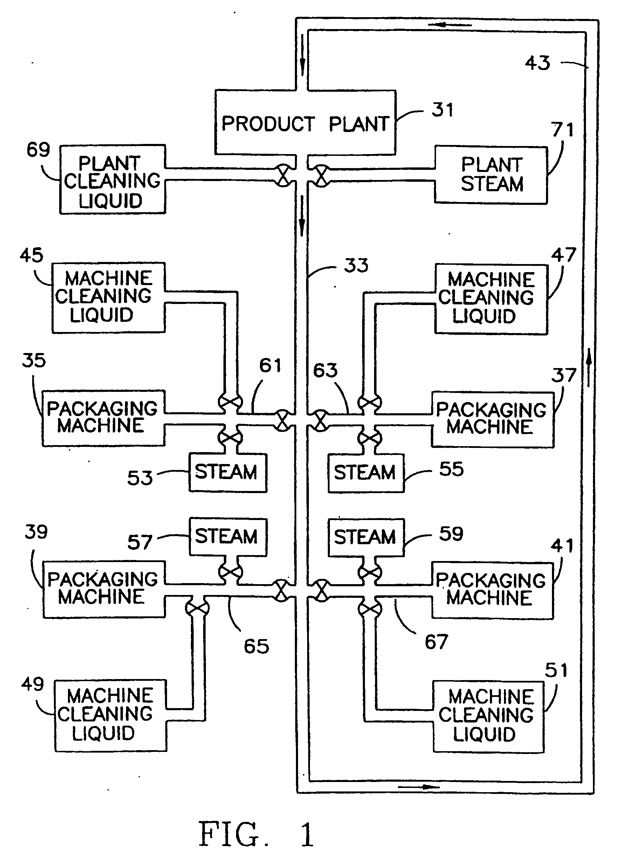

The product plant 31 shown in Figure 1 is broadly any source of material to be packaged or otherwise dispensed. For. example, the plant 31 may be a sterilizing process plant for providing a food liquid product such as milk destined for human consumption. The product to be packaged leaves the product plant via a supply vessel or process line 33 which feeds several (here, four) product dispensing machines 35, 37, 39, and 41. Any remaining product which is suitable for use can be recycled to the product plant 31 via the recycle line 43. The product dispensing machines 35, 37, 39, and 41 can take a variety of different forms and accomplish a variety of different functions. One exemplary type of machine, illustrated here, is a packaging machine to divide a process stream into small, discrete packages.

Each illustrated packaging machine 35, 37, 39, and 41 has an independent source (respectively denoted as 45, 47, 49, and 51) of one or. more cleaning liquids, as well as an independent source (respectively denoted as 53, 55, 57, and 59) of one or more sterilizing fluids. The number, choice, and nature of these cleaning and sterilizing fluids is not critical. One of the fluids, however, is desirable steam in one embodiment.

The four interfaces, 61, 63, 65, and 67 are branch lines which interface between or connect the process line 33 and the machines 35, 37, 39, and 41 to distribute the product. The interfaces 61, 63, 65, and 67 also connect to the cleaning and sterilizing fluid sources 45, 47, 49, 51, 53, 55, 57, and 59, and connect those fluid sources to the packaging machines 35, 37, 39, and 41 when it is necessary to clean and sterilize the interfaces and packaging machines.

The product plant 31 of Figure 1 also has its own source 69 of cleaning fluid and source 71 of sterilizing fluid, which are used to clean and sterilize the process line 33.

One typical requirement for. operating the apparatus of Figure 1 is that the plant cleaning and sterilizing fluids should not come into contact with the machine cleaning and sterilizing fluids at any time. These respective fluids are always separated by a series of at least two valves in the present food packaging line. Also, the food or other product and the cleaning liquids are always separated by a series of at least two valves in the present packaging line. Yet, every part of the system which is in contact with the product at any time must first be cleaned and sanitized by contact with the cleaning fluids.

In this embodiment, each interface 61, 63, 65, and 67 has a series of valves, best shown in later figures, which can be operated to create a movable, ever-present buffer between the food, the machine cleaning and sanitizing fluids, and the process line cleaning and sanitizing fluids. As will become apparent, any single packaging machine shown in Figure 1 can be taken out of service, cleaned and sterilized, and returned to service without affecting flow through the process line 33 or the other machines and without compromising the integrity of the product anywhere in the system. One key to the versatility of this system is the construction of the interfaces 61, 63, 65, and 67.

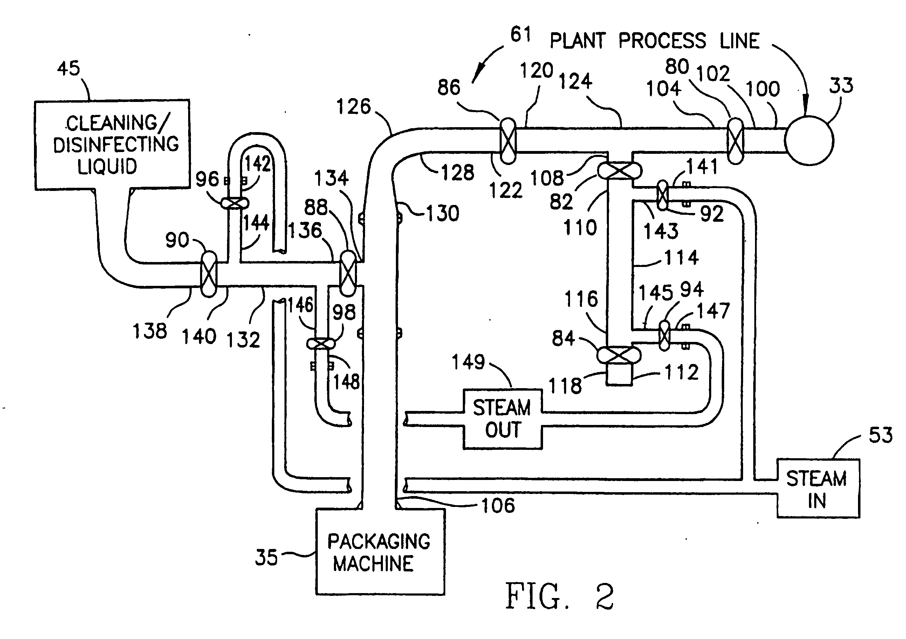

Figure 2 is a more detailed, schematic side elevation of the interface 61 between the process line 33, the packaging machine 35, and the cleaning fluid and steam supplies 45 and 53. The illustrated interface 61 has ten valves, identified by reference characters 80-98. The valves 80, 82, 84, 86, 88, and 90 are food, self-draining, diaphragm shut-off valves which are rated to pass or contain food liquids and cleaning liquids and to at least contain steam at sterilizing pressures and temperatures. The valves 92 and 98 are steam/condensate drain valves which restrict steam flow at the outlet and drain condensate.

As used herein, particularly for the valves 80-90, the "inlet" or "outlet" are each broadly and non-literally defined, as fluids flow in both directions through many of the valves in the interface 61 at various times. For convenience, the sides of the valves 80, 82, 84, and 86 at which the food product flowing from.the process line 33 normally enters are defined as the inlets of those valves, while the sides of the valves 88 and 90 at which the cleaning liquid flowing from the source 45 normally enters are defined as the inlets of those valves. Also, "upstream" and "downstream" are defined at any time with respect to the flow of a particular fluid. Different fluids, or even a particular fluid at different times, flow in different directions. Further, one structure which is "adapted to communicate" or "for communicating" with another is defined in this specification and the claims as one which can communicate with the other, assuming any valves between them are opened. The insertion of a additional valve, vessel, tank, etc., between two structures does not prevent them from being "adapted to communicate" or "for communicating" as defined here. Still further, the present specification identifies "at least one" of many structures, of which only one is shown in the particular embodiments described in the specification and drawings. Two, three, four, or. more of each of these structures, arranged in series or parallel, are specifically contemplated as alternative embodiments.

Returning to Figure 2, the interface 61 has at least one product inlet 100 adapted to communicate with at least one food product supply vessel (here the plant process line 33) to receive at least one supply of the food product. The valve 80 is at least one product supply valve having at least one inlet 102 for communicating with said product inlet and at least one outlet 104 for communicating with the product dispensing machine outlet 106. The product inlet 102 is preferably slanted sufficiently toward the process line 33 to drain its entire contents into the process line 33 when the valve 80 is closed.

The valve 82 is at least one drain valve having at least one inlet 108 for communicating with the outlet of the product supply valve 80 and at least one outlet 110 for communicating with the drain 112, here via a drain line 114. The valve 84 is another drain valve placed in series with the valve 82 and having at least one inlet 116 for communicating with the drain line 114 and at least one outlet 118 for communicating with the drain 112. An isolation space is defined between the valves 82 and 84.

The valve 86 is at least one isolation valve having at least one inlet 120 for communicating with the outlet 104 of the product supply valve 80 and at least one outlet 122 for. communicating with the product dispensing machine outlet 106. The tee 124 defines an open common space between the valves 80, 82, and 86. The arms of the tee 124 can be slanted toward their junction sufficiently to drain its entire contents to the inlet 108 of the valve 82 when the valves 82 and 84 are open, so the tee 124 can drain completely when it is not in use. For. compactness the tee 124 can be collapsed so it is merely the junction between the valve outlet 104 and the valve inlets 108 and 120.

The elbow 126 has a first run 128 which is slanted away from the outlet 122 and a second run 130 which communicates with the first run 128 and the product dispensing machine outlet 106. This again is self-draining construction.

The second run 130 has a cleaning liquid inlet or branch 132 for supplying cleaning liquid from the source 45 to the interface 61 and, in this embodiment, the packaging machine 35. Separate supplies of cleaning liquid could also be supplied for. the interface 61 and the machine 35, by providing a different arrangement. The branch 132 has an outlet defined by the outlet 134 of at least one first cleaning liquid supply valve 88 for communicating with the product dispensing machine outlet 106. The valve 88 also has at least one inlet 136.

The branch 132 also has at least one second cleaning liquid supply valve 90 having at least one inlet 138 for communicating with the cleaning liquid source 45 and at least one outlet 140 for communicating with the inlet 136 of the first cleaning liquid supply valve 88.

The valves 92 and 96 are steam inlet valves having inlets 141 and 142 connected by suitable piping to the steam.source 53. The outlets 143 and 144 of the valves 92 and 96 communicate with the drain line 114 and the branch line 132, respectively. The valves 94 and 98 are steam drain valves having inlets 145 and 146 communicating with the drain line 114 and the branch line 132, respectively. The outlets 147 and 148 of the valves 94 and 98 communicate with the condensate drain 149.

The interface of Figure 2 in various states of operation is described in more detail in International Patent Specification No: WO 98/38092 and European Patent Specification No: 0 963 318, to which reference is directed.

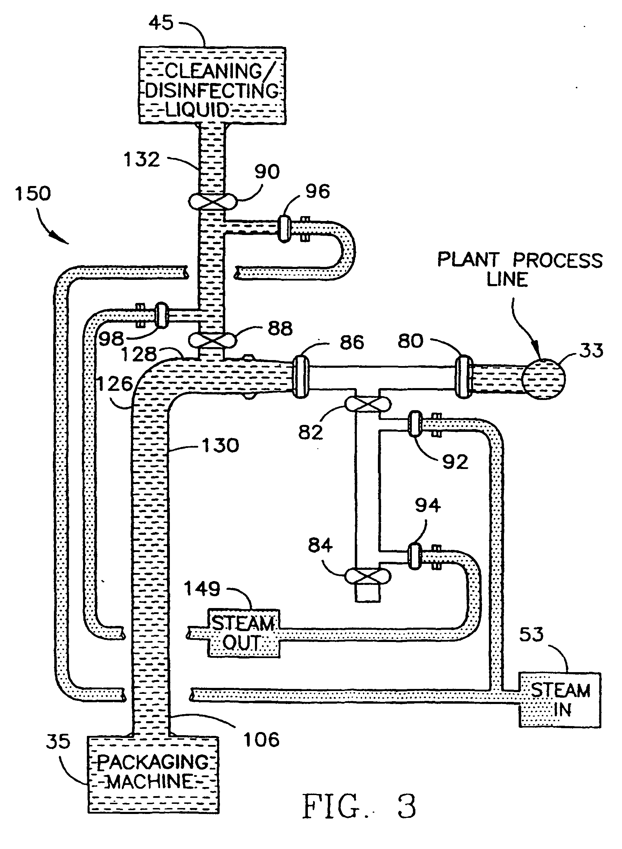

Figure 3 shows a suitable environment for a valve assembly with a valve body of the present invention; an interface 150 between a process line 33, a packaging machine 35, and cleaning fluid and steam supplies 45 and 53. The illustrated interface 150 has ten valves, identified by reference characters 80-98. The valves 80, 82, 84, 86, 88, and 90 are self-draining, diaphragm shut-off valves which are rated to pass or. contain food liquids and cleaning liquids and to at least contain steam at sterilizing pressures and temperatures. The valves 92 and 96 are steam inlet valves, and the valves 94 and 98 are steam/condensate drain valves which restrict steam.flow at the outlet and drain condensate.

Food or other material to be packaged is admitted to the interface 150 from the plant process line 33 via the valve 80. The valve 82 is at least one drain valve for communicating between the outlet of the product supply valve 80 and the drain 112, here via a drain line 114. The valve 84 is another drain line valve placed in series with the valve 82 for communicating between the drain line 114 and the drain 112. An isolation space is defined between the valves 82 and 84.

The valve 86 is at least one isolation valve having at least one inlet 120 for communicating with the outlet 104 of the product supply valve 80 and at least one outlet 122 for communicating with the product dispensing machine outlet 106. The tee 124 defines an open common space between the valves 80, 82, and 86. The arms of the tee 124 can be slanted toward their junction sufficiently to drain its entire contents through the valve 82 when the valves 82 and 84 are open, so the tee 124 can drain completely when it is not in use. For compactness the tee 124 can be collapsed so there is very little separation between the valves 80, 82, and 86.

The elbow 126 has a first run 128 which is slanted away from the outlet 122 and a second run 130 which communicates with the first run 128 and the product dispensing machine outlet 106. This again is self-draining construction.

The second run 130 has a cleaning liquid inlet or branch 132 for supplying cleaning liquid from.the source 45 to the interface 150 and, in this embodiment, the packaging machine 35. Separate supplies of cleaning liquid could also be supplied for. the interface 150 and the machine 35, by providing a different arrangement. The branch 132 has an outlet defined by the outlet of at least one first cleaning liquid supply valve 88 for communicating with the product dispensing machine outlet 106. The branch 132 also has at least one second cleaning liquid supply valve 90 for communicating between the cleaning liquid source 45 and the first cleaning liquid supply valve 88.

The valves 92 and 96 are steam.inlet valves connected by suitable piping to the steam.source 53. The valves 92 and 96 communicate with the drain line 114 and the branch line 132, respectively. The valves 94 and 98 are steam drain valves communicating with the drain line 114 and the branch line 132, respectively. The valves 94 and 98 communicate with the condensate drain 149. The entire branch 132 is vertical, and joins with the generally horizontal first run.

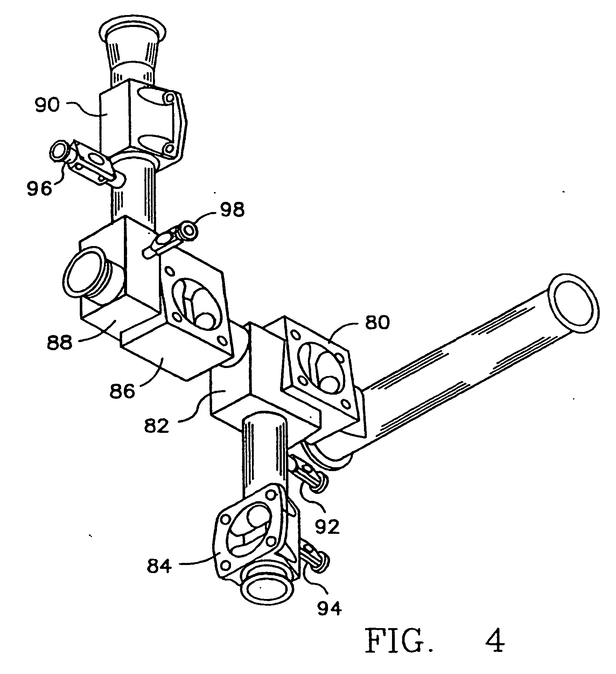

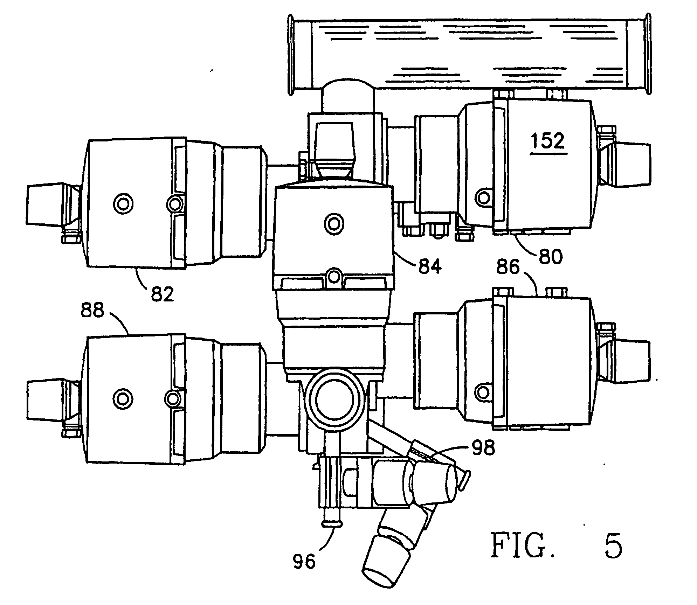

Figures 4 and 5 show more practical details of the interface of Figure 3. Figure 4 illustrates partial consolidation of several of the valve bodies. This not only saves space and weight, but improves drainage from within the valves and reduces the lengths of passages between the valves which are sometimes known as "dead legs" because they represent areas where material flow can stagnate. Specifically, the valves 80 and 82; 84 and 94; and 86, 88, and 98 are integrated in this embodiment. The respective valves are also oriented so each one will drain properly thereby minimizing the dead leg effect, which is accomplished by the bodies of the valves 80 and 82, or the valves 86 and 88, tilted relative to each other.

Figure 5 is a top plan view of the embodiment of Figure 4, showing the valves fully assembled with their valve operators - such as the operator 152 of the valve 80 - in place. The valve operators can be conventional.

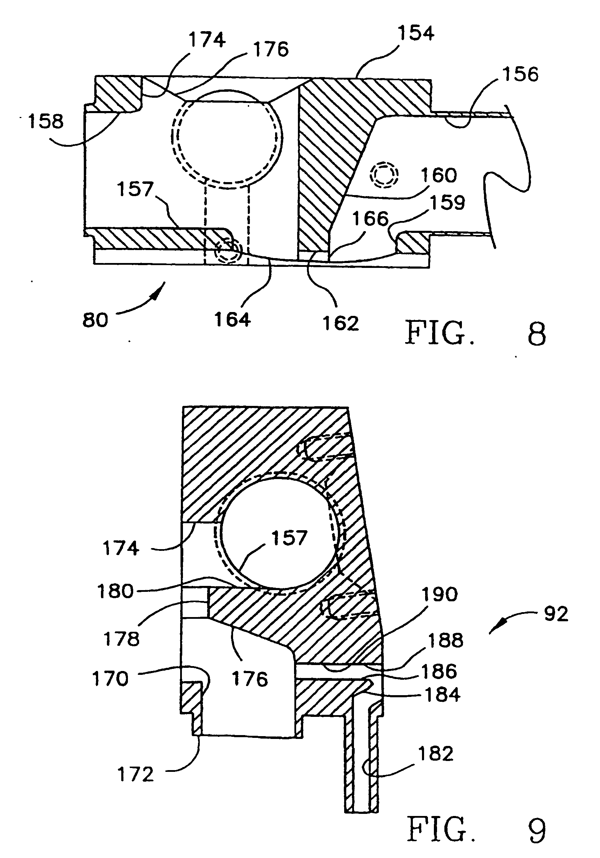

The illustrated valves are diaphragm valves suitable for dairy produce piping. The parts of each valve 80-96 are best illustrated by Figure 8, which is a section through the valve 80. The valve body 154 is a machined, cast, or otherwise formed block of stainless steel or other suitable material. The valve body 154 defines a first port 155 defined by the wall of an inlet passage or. first passage 156, an outlet passage 157 terminating in a second port or outlet 158, and a diaphragm aperture 159. In this embodiment, the inlet 156 and outlet 158 are at least generally in line, but they could be arranged out of line instead. The inlet 156 and outlet 158 are separated by a weir 160 having a seat 162 which faces the diaphragm aperture 159. The weir 160 further includes a first face 163 on the same side of the first weir 160 as the first port 155 and a second face 164 on the same side of the first weir 160 as the second port 158. A diaphragm made of an elastomeric polymer covers and seals the aperture 159 and supports an integral valve element. The diaphragm is flexed perpendicular to its plane by the valve operator to bring the valve element into or out of engagement with the seat 162, thus selectively closing of opening the valve 80.

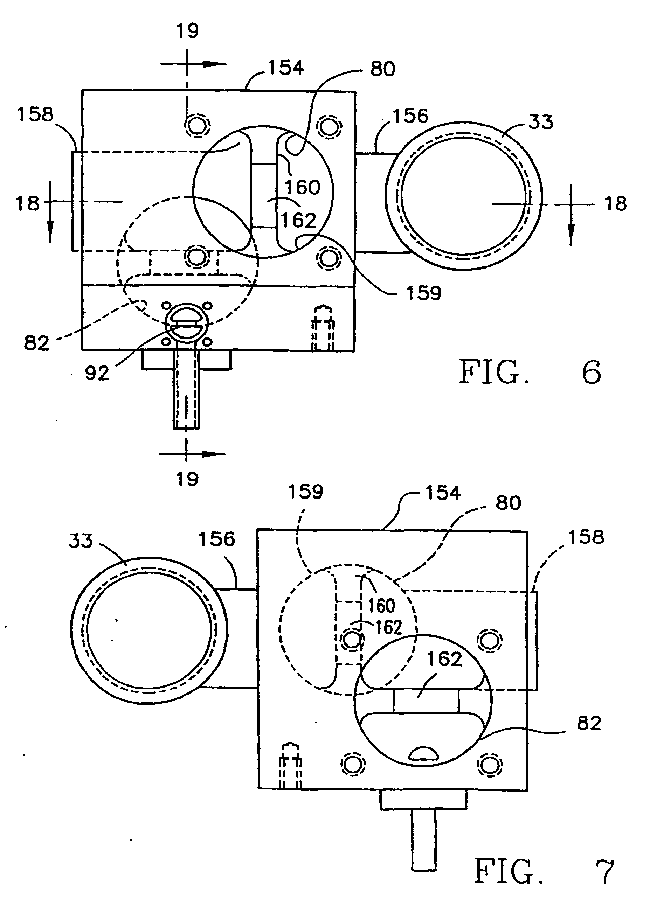

Figures 6-9 show further integration of the product valves 80 and 82 and the steam inlet valve 92. Figure 3 illustrates that the valve 80 allows product to enter from the process line 33 en route to the packaging machine 35, while the valve 82 controls access to a drain line 114 which may pass waste fluids and additionally recirculate cleaning fluids. The steam inlet valve 92 provides steam in the drain line 114 and downstream of the valve 80.

Referring to Figures 6 and 9, the valve 82 shares the valve body 154 with the valves 80 and 92. The valve 82 has an inlet passage 157 which is also the outlet passage of the valve 80. The valve 82 has an outlet passage 170 terminating in a third outlet 172, a diaphragm aperture 174, and a weir 176 having a seat 178. The diaphragm and valve element of the valve 82 are not illustrated in Figures 16 and 19.

As is best illustrated in Figure 9, the weir 176 has a first face 177 on the same side of the second weir as the third port 172. The weir 176 has a second face 180 on the same side of the second weir 76 as the third port 172. This second face also defines a portion of the outlet passage 157. The inlet face is shaped and positioned so it is self-draining over the seat 178 of the weir 176 when the valve 82 is opened. The valves 80 and 82 are oriented orthogonally to facilitate their integration into a self-draining unit with no dead legs. The outlet 172 empties into the drain line 114, as described previously in connection with Figure 2.

Figure 9 also best shows the steam.inlet valve 92, which also is a diaphragm valve formed in the valve body 154. The valve 92 admits steam.into the third passage. The valve 92 has an inlet passage 182, a weir 184, a seat 186, a diaphragm aperture 188, and an outlet passage 190 analogous to the corresponding elements of the valves 80 and 82. The inlet passage 182 is connected to the steam source 53 (see Figure 2). The outlet passage 190 empties into the outlet passage 170 of the valve 82. The outlet passage 190 is formed and positioned to be self-draining into the outlet passage 170. The diaphragm.and valve element of the valve 92 are like those of the valve 80, except that if the sterilizing fluid is steam or other fluid at an elevated temperature or pressure, the diaphragm and valve element for the steam inlet valve 92 must be thermally and chemically resistant. The necessary diaphragm materials are known and readily available to those skilled in the art.

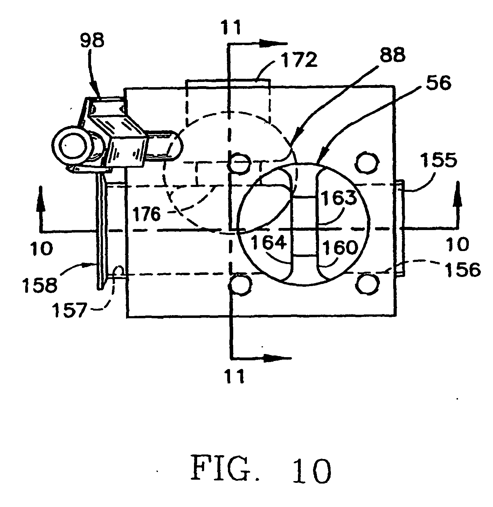

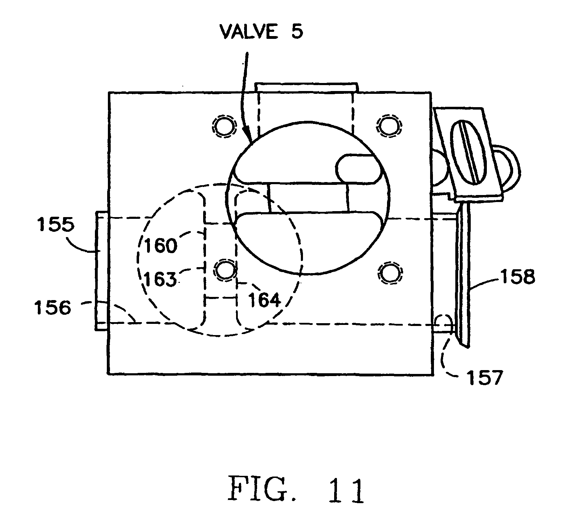

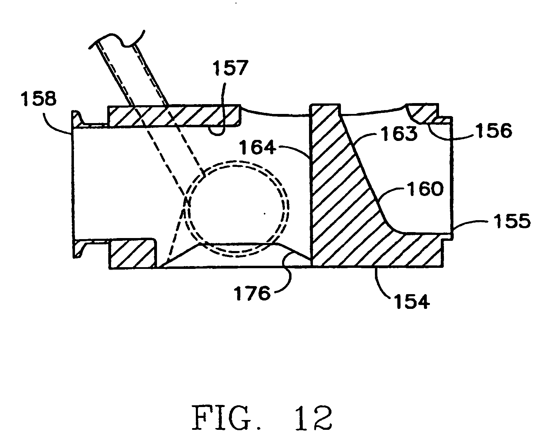

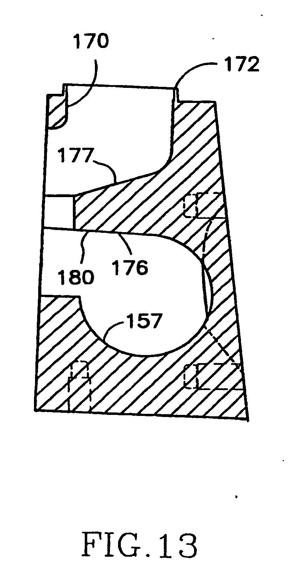

Figures 10-13 show a similar integration of the valves 86, 88, and 98 in a single valve body, here formed of one block of stainless steel. The placement of the steam valve is different. Corresponding parts of Figures 10-13 bear the same reference characters as in Figures 6-9.

Figures 10-13 show an integrated diaphragm valve body 154 having a first port 155, a second port 158, and a third port 172. A first weir 160 separates the first port 155 from the second port 158. The first weir 160 has a first face 163 on the same side of the first weir. 160 as the first port 155. The first face 163 and the surfaces defining the first port 155 define a first passage 156. The first weir 160 has a second face 164 on the same side of the first weir 160 as the second port 158. The second face 164 and the surfaces defining the second port 158 define a second passage 157. A second weir 176 separates the third port 172 from.the second port 158. The second weir 176 has a first face 177 on the same side of the second weir 176 as the third port 172. The first face 177 of the second weir 176 and the surfaces defining the third port 172 define a third passage 170. The second weir 176 has a second face 180 further defining the second passage 157.

The second face 180 of the second weir 176 is a non-pooling surface which self-drains through the third port 172 when the valve body 154 is in the normal orientation.

Still referring to Figures 10-13, all the internal surfaces of the valve body 154 are non-pooling surfaces which are self-draining through at least one of the first port 155, second port 158, and third port 172 when the valve body 154 is in the normal orientation and the valve controlling the drainage is open. For example, the second face 164 of the first weir 160 is a non-pooling surface which self-drains through the third port 172 when the valve body is in the normal orientation.

The second face 180 of the second weir 176 is merged with the surfaces defining the second passage 157 to define an essentially continuous surface.

Thus, valve assemblies have been described which have several desirable features. In particular, dead legs and discontinuities in the valves which can collect undesired deposits are minimized, the size and weight of the valve assemblies are reduced, and the respective orientations of the integrated valves are fixed so the valves will operate and drain properly.

## Claims

1. An integrated diaphragm valve body (154) having a normal orientation that it occupies in use, and defining first (155), second (158) and third (172) ports; a first weir (160) separating the first port (155) from the second port, having first (163) and second (164) faces, with the first face (163) on the same side as the first port (155) and defining with the first port a first passage; and a second weir (176) separating the third port (172) from the second port (158), and having first (177) and second (180) faces with the first face (177) on the same side as the third port (172) defining with the third port a third passage, and the second face (180) defining a second passage;
**CHARACTERIZED IN THAT**
the first and second weirs (16,176) have valve seats (162,178) oriented orthogonally relative to each other, and the second face (180) of the second weir (176) is a non-pooling surface which self-drains through at least one of the ports when the valve body is in its normal orientation.

2. A diaphragm valve body according to Claim 1 wherein the valve seats (162,178) face in opposite directions.

3. A diaphragm valve body according to Claim 1 or Claim 2 made in one piece.

4. A diaphragm valve body according to Claim 2 made of metal.

5. A diaphragm valve body according to any preceding Claim wherein all valve surfaces defined in the body (154) are non-pooling surfaces which self-drain through at least one of the first, second and third ports (155,158,172), wherein the valve body (154) is in its normal orientation.

6. A diaphragm valve body according to any preceding Claim wherein the second face (164) of the first weir (160) is a non-pooling surface which self-drains through the third port (172) when the valve body (154) is in its normal orientation.

7. A diaphragm valve body according to any preceding Claim wherein the second face (180) of the second weir merges with the surfaces defining the second passage to define a continuous surface.

## Patentansprüche

1. Integrierter Membranventilkörper (154), der eine normale Ausrichtung hat, die er bei Benutzung einnimmt, und einen ersten (155), zweiten (158) und dritten (172) Port definiert; mit einem ersten Dichtsteg (160), der den ersten Port (155) vom zweiten Port trennt und eine erste (163) und zweite (164) Fläche hat, wobei die erste Fläche (163) sich auf der gleichen Seite wie der erste Port (155) befindet und mit dem ersten Port einen ersten Durchlass definiert; und mit einem zweiten Dichtsteg (176), der den dritten Port (172) vom zweiten Port (158) trennt und eine erste (177) und zweite (180) Fläche hat, wobei die erste Fläche (177) sich auf der gleichen Seite wie der dritte Port (172) befindet und mit dem dritten Port einen dritten Durchlass definiert, und die zweite Fläche (180) einen zweiten Durchlass definiert;
**dadurch gekennzeichnet,**
**dass** der erste und der zweite Dichtsteg (16, 176) Ventilsitze (162, 178) haben, die orthogonal zueinander liegen, und die zweite Fläche (180) des zweiten Dichtstegs (176) eine Fläche ist, auf der es nicht zu Ansammlungen kommt, die sich selbst durch wenigstens einen der Ports entleert, wenn sich der Ventilkörper in seiner normalen Ausrichtung befindet.

2. Membranventilkörper nach Anspruch 1, wobei die Ventilsitze (162, 178) in entgegengesetzte Richtungen zeigen.

3. Membranventilkörper nach Anspruch 1 oder 2, der einstückig ausgebildet ist.

4. Membranventilkörper nach Anspruch 2, der aus Metall besteht.

5. Membranventilkörper nach einem der vorhergehenden Ansprüche, wobei alle in dem Körper (154) definierten Ventilflächen Flächen sind, auf denen es nicht zu Ansammlungen kommt und die sich selbst durch wenigstens einen des ersten, zweiten und dritten Ports (155, 158, 172) entleeren, wobei sich der Ventilkörper (154) in seiner normalen Ausrichtung befindet.

6. Membranventilkörper nach einem der vorhergehenden Ansprüche, wobei die zweite Fläche (164) des ersten Dichtstegs (160) eine Fläche ist, auf der es nicht zu Ansammlungen kommt und die sich durch den dritten Port (172) selbst entleert, wenn sich der Ventilkörper (154) in seiner normalen Ausrichtung befindet.

7. Membranventilkörper nach einem der vorhergehenden Ansprüche, wobei die zweite Fläche (180) des zweiten Dichtstegs mit den Flächen verbunden ist, die den zweiten Durchlass definieren, um eine kontinuierliche Fläche zu definieren.

## Revendications

1. Corps de vanne à membrane intégrée (154) ayant une orientation normale qu'il occupe en utilisation, et définissant un premier (155), un deuxième (158) et un troisième (172) orifices ; un premier déversoir (160) séparant le premier orifice (155) du deuxième orifice, ayant une première face (163) et un deuxième face (164), la première face (163) étant du même côté que le premier orifice (155) et définissant avec le premier orifice un premier passage ; et un deuxième déversoir (176) séparant le troisième orifice (172) du deuxième orifice (158) et ayant une première face (177) et une deuxième face (180), la première face (177) étant du même côté que le troisième orifice (172) et définissant avec le troisième orifice un troisième passage, et la deuxième face (180) définissant un deuxième passage ;
**caractérisé en ce que**
les premier et deuxième déversoirs (16, 176) ont des sièges de vanne (162, 178) orientés perpendiculairement l'un à l'autre, et la deuxième face (180) du deuxième déversoir (176) est une surface sans zone de rétention et à auto-drainage à travers au moins un des orifices lorsque le corps de vanne est dans son orientation normale.

2. Corps de vanne à membrane selon la revendication 1, dans lequel les sièges de vanne (162, 178) sont tournés dans des directions opposées.

3. Corps de vanne à membrane selon la revendication 1 ou la revendication 2, fabriqué en une seule pièce.

4. Corps de vanne à membrane selon la revendication 2, fabriqué en métal.

5. Corps de vanne à membrane selon une quelconque des revendications précédentes, dans lequel toutes les surfaces de vanne définies dans le corps (154) sont des surfaces sans zone de rétention et à auto-drainage à travers au moins un des premier, deuxième et troisième orifices (155, 158, 172), lorsque le corps de vanne (154) est dans son orientation normale.

6. Corps de vanne à membrane selon une quelconque des revendications précédentes, dans lequel la deuxième face (164) du premier déversoir (160) est une surface sans zone de rétention et à auto-drainge à travers le troisième orifice (172) lorsque le corps de vanne (154) est dans son orientation normale.

7. Corps de vanne à membrane selon une quelconque des revendications précédentes, dans lequel la deuxième face (180) du deuxième déversoir se raccorde aux surfaces définissant le deuxième passage de manière à définir une surface continue.
